# EUROPÄISCHE PATENTSCHRIFT

(11) **EP 0 354 459 B1**
(45) Veröffentlichungstag und Bekanntmachung des Hinweises auf die Patenterteilung: **09.03.1994**
(21) Anmeldenummer: 89114247.3
(22) Anmeldetag: 02.08.1989
(51) Int. Cl.: H04N 5/44, H04B 1/20

(54) **Fernsehempfänger**
Televison receiver
Récepteur de télévision

(30) Priorität: 10.08.1988 DE 3827050
(43) Veröffentlichungstag der Anmeldung: 14.02.1990
(73) Patentinhaber: Deutsche Thomson-Brandt GmbH, 78003 Villingen-Schwenningen (DE)
(72) Erfinder: Geiger, Erich, Dipl.-Ing., D-7734 Unterkirnach (DE); Schiering, Rolf, D-3005 Hemmingen 1 (DE)

(56) Entgegenhaltungen:
- EP-A- 0 057 914
- EP-A- 0 103 707
- GB-A- 2 155 713
- GB-A- 2 197 104

## Beschreibung

Die Erfindung betrifft einen Fernsehempfänger gemäß dem Oberbegriff des Anspruchs 1.

Ein Fernsehempfänger der eingangs genannten Art ist aus der GB-A-2 197 104 bekannt. Bei diesem bekannten Fernsehempfänger ist eine Einrichtung vorgesehen, mit der Fernbedienungs-Codes, die einem anderen Gerät (Videorecorder) zugeordnet sind, interpretiert werden können als ob dem Fernsehempfänger zugeordnete Codes zu verarbeiten wären.

Dadurch können mit einem "fremden" Fernbediengeber sowohl das diesem zugeordnete Gerät (Videorecorder) als auch der Fernsehempfänger bedient werden.

Bei diesem bekannen Fernsehempfänger ist es von Nachteil, daß bei Hinzutreten weiterer fremder Geräte mit jeweils eigenen Fernbediengebern die Zahl der Fernbediengeber nicht weiter reduzierbar ist. Nach vorausgegangenem Lernvorgang kann zwar immer ein "fremder" Fernbediengeber nicht nur für das betreffende "fremde" Gerät, sondern auch für den Fernsehempfänger verwendet werden. Dieser "fremde" Fernbediengeber eignet sich jedoch nicht dazu, ein zweites "fremdes" Gerät zu steuern. Gemäß der bekannten Einrichtung wird also bei n fernbedienbaren Geräten die Anzahl der erforderlichen Fernbediengeber lediglich um einen auf n-1 Fernbediengeber verringert.

Aus der DE-A-35 44 183 ist ein Fernsehempfänger bekannt, der den von einem Fernbediengeber empfangenen, einer Funktion zugeordneten ersten Code an ein peripher angeschlossenes Gerät zur Steuerung dieser Funktion weitergibt. Dadurch wird zwar erreicht, daß mit demselben Fernbediengeber sowohl der Fernsehempfänger als auch das daran angeschlossene periphere Gerät, insbesondere ein Videorecorder, bedient werden können und nicht zwei getrennte Fernbediengeber für den Fernsehempfänger und den Videorecorder erforderlich sind. Der Fernsehempfänger dient dabei als Empfangs- und Zwischenstation für die von dem zugeordneten Fernbediengeber ausgehende Befehle und sendet diese an den angeschlossenen Videorecorder über eine Leitung oder eine Infrarot-Strecke weiter.

Dabei ist es Voraussetzung, daß die für die einzelnen Funktionen vom Fernbediengeber gesendeten Codes den den einzelnen Funktionen zugeordneten Codes im Videorecorder entsprechen. Wenn der Fernsehempfänger mit seinem Fernbediengeber und der Videorecorder von derselben Firma sind, ist das im Regelfall auch gegeben. Wenn jedoch der Fernsehempfänger und die peripher angeschlossenen Geräte verschiedener Ebenen, z.B. ein Fernsehempfänger, ein Videorecorder, ein CD-Spieler und ein Audio-Gerät, von verschiedenen Firmen stammen, ist diese Übereinstimmung der Codes oft nicht mehr gegeben.

Der Erfindung liegt die Aufgabe zugrunde, die Bedienung peripher angeschlossener Geräte über den Fernsehempfänger auch dann mit nur einem Fernbediengeber zu ermöglichen, wenn der Fernsehempfänger und das peripher angeschlossene Gerät oder die peripher angeschlossenen Geräte bezüglich ihrer Fernbedien-Steuercodes nicht übereinstimmen.

Diese Aufgabe wird durch die im Anspruch 1 angegebene Erfindung gelöst. Vorteilhafte Weiterbildungen der Erfindung sind in den Unteransprüchen angegebenen.

Bei der erfindungsgemäßen Lösung vollführt somit der Fernsehempfänger einen Lernprozeß, indem er die zunächst unbekannten Codes für die einzelnen Funktionen von dem Fernbediengeber des peripheren Gerätes lernt und speichert. Der Fernsehempfänger weiß dann, welcher ihm zunächst fremden Code für eine bestimmte Funktion an das periphere Gerät wie den Videorecorder gesendet werden muß. Wenn der dem Fernsehempfänger zugeordnete Code von seinem Fernbediengeber für eine bestimmte Funktion des Videorecorders kommt, setzt er automatisch diesen für den Videorecorder nicht passenden Code in den für die betreffende Funktion passenden neuartigen Code um. Vorzugsweise werden die einzelnen Funktionen des Videorecorders wie z.B. Start, Uhrzeit, Programm, Stop, VPS und dgl. auf dem Bildschirm angezeigt. Dadurch wird der Benutzer aufgefordert, nacheinander die den Funktionen entsprechenden Tasten des Fernbediengebers des Videorecorders zu drücken. Dann werden diese Codes an den Fernsehempfänger gesendet und dort den einzelnen Funktionen zugeordnet gespeichert.

Durch die Erfindung ergibt sich der Vorteil, daß die peripheren Geräte von verschiedenen Firmen stammen und die bei ihnen verwendeten Codes für die einzelnen Funktionen beliebig unterschiedlich sein können. Für die Bedienung aller Geräte ist dann nur noch der Fernbediengeber des Fernsehempfängers erforderlich. Alle anderen Fernbediengeber der peripheren Geräte können nach dem erfolgten Lernvorgang weggelegt werden. Die Einheit aus dem Fernsehempfänger und den peripheren Geräten ist dann nicht mehr auf die sogenannte Konzernsprache beschränkt, sondern kann alle Codes verschiedener Firmen verarbeiten. An den Fernbedieneinheiten sind keine Änderungen erforderlich, da die Anpassung zwischen den verschiedenen Codes im Fernsehempfänger selbst erfolgt. Die Erfindung ist anwendbar für alle Arten der Steuerbefehle für die peripheren Geräte, insbesondere des Videorecorders. Das sind z.B. Wiedergabe, Aufnahme, Stop, Rücklauf, schneller Vorlauf, Suchlauf, Start, Uhrzeit, Programm, VPS, VPV und dgl.

Die Erfindung wird anhand der Zeichnung an einem Ausführungsbeispiel erläutert. Darin zeigen
- Fig. 1: eine Prinzipbild der erfindungsgemäßen Lösung am Beispiel eine Videorecorders als peripheres Gerät und
- Fig. 2: eine Tabelle zur Erläuterung der Wirkungsweise der Fig. 1.

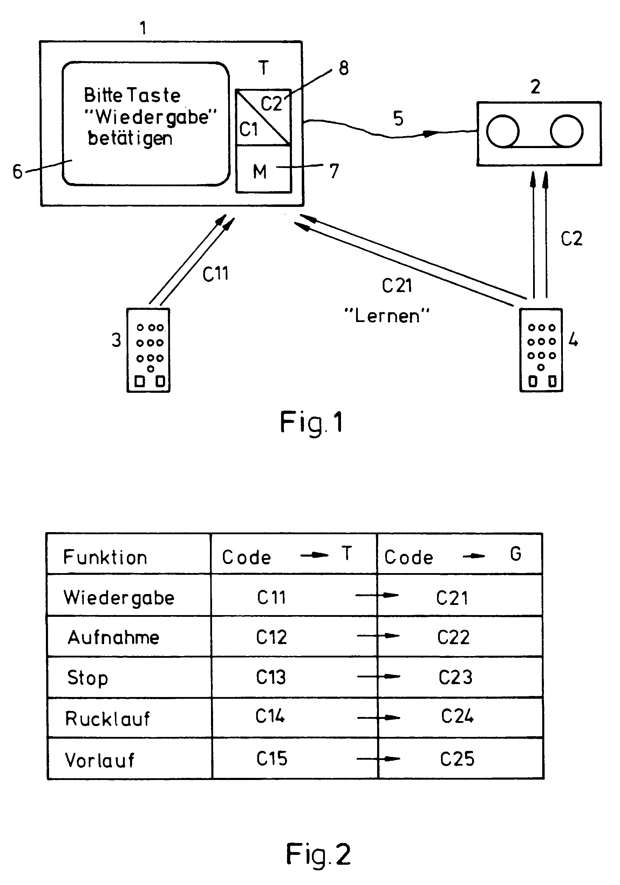

In Fig. 1 ist der Fernsehempfänger 1 über das Kabel 5 an den Videorecorder 2 angeschlossen. Der Fernsehempfänger 1 ist mit einem Fernbediengeber 3 bedienbar, der Codesignale C1 aussendet. Der Videorecorder 2 ist mit dem Fernbediengeber 4 bedienbar, der Codes C2 sendet. Es sei angenommen, daß der Fernsehempfänger 1 von einer Firma T, der Videorecorder 2 jedoch von einer Firma G stammt. Wenn jetzt der Fernbediengeber 3 für die Funktion des Videorecorders 2 die bei der Firma T üblichen Codes C1 aussendet, so ist damit über den Fernsehempfänger 1 eine Steuerung des Videorecorders 2 nicht möglich, weil dieser für die Steuerung der einzelnen Funktionen andere Codes benötigt, die der Fernbediengeber nicht kennt und daher auch nicht senden kann.

Diese Schwierigkeit wird jetzt folgendermaßen gelöst. Auf dem Bildschirm 6 des Fernsehempfängers 1 wird der Benutzer aufgefordert, an dem Fernbediengeber 4 die den einzelnen Funktionen des Recorders 2 zugeordneten Tasten nacheinander zu betätigen und den Fernbediengeber 4 auf den Fernsehempfänger 1 zu richten. Der Fernbediengeber 4 sendet jetzt den Code C21 an den Fernsehempfänger 1. Der Code C21 wird in dem Speicher als für die Funktion Wiedergabe gültiger Code hinsichtlich des Recorders 2 gespeichert. Der Fernsehempfänger 1 quittiert diesen Vorgang durch eine entsprechende Anzeige auf dem Bildschirm 6 etwa mit dem Inhalt **"Code für Funktion Wiedergabe gespeichert"** oder **"Wiedergabe-Funktion für Videorecorder gelernt"**. Auf diese Weise werden auf dem Bildschirm 6 die einzelnen Funktionen abgefragt und nacheinander die zugehörigen Codes C21 - C25 usw. in dem Speicher 7 gespeichert.

Wenn jetzt an dem Fernbediengeber 3 die Taste für Wiedergabe gedrückt wird, sendet der Fernbediengeber 3 den Code C11 an den Fernsehempfänger 1, der für den Recorder 2 nicht richtig wäre. Der Code C11 wird in dem Fernsehempfänger 1 mit dem Übersetzer 8 selbsttätig in den für den Recorder 2 gültigen Code C21 umgesetzt. Dieser Code gelangt über die Leitung 5 an den Recorder 2 um bewirkt dort die erwünschte Steuerung auf die Funktion Wiedergabe. Auf diese Weise erfolgt für alle im Recorder 2 vorhandenen und steuerbaren Funktionen jeweils eine Übersetzung des vom Hersteller T verwendeten Codes C1 in den vom Hersteller G verwendeten Code C2. Auf diese Weise können mit dem Fernbediengeber 3 alle an den Fernsehempfänger 1 angeschlossenen peripheren Geräte gesteuert werden, auch wenn diese von verschiedenen Firmen stammen und gänzlich unterschiedliche Codes für die Steuerung der Funktionen aufweisen.

Gemäß Fig. 2 sendet der Fernbediengeber 3 der Firma T für die dargestellten Funktionen die Codes C11 - C15 an den Fernsehempfänger 1. Aufgrund des erfolgten Lernvorganges der Codes C21 - C25, die der Videorecorder 2 der Firma G für diese Funktion benötigt, werden die Codes C11 - C15 in dem Fernsehempfänger 1 in die Codes C21 - C25 umgesetzt. Diese aufgrund des Lernvorganges mögliche Umsetzung mit dem Übersetzer 8 ist durch die waagerechten Striche angedeutet. Entsprechend wird verfahren für weitere an den Fernsehempfänger 1 angeschlossene Geräte mit unterschiedlichen Codes, z.B. einen CD-Spieler der Firma H, ein übliches Audio-Gerät der Firma D und einen DAT-Recorder der Firma F.

## Patentansprüche

1. Fernsehempfänger (1), der mittels eines Fernbediengebers (3), der einen ersten Code (C1) sendet, fernbedienbar ist, und wobei an den Fernsehempfänger (1) ein Gerät (2) peripher anschließbar ist, das mittels eines von dem ersten Code (C1) abweichenden zweiten Codes (C2) fernbedienbar ist, und im Fernsehempfänger (1) ein Speicher (M) für den ersten Code (C1) und den zweiten Code (C2) vorgesehen ist und zwischen den Codes (C1, C2) eine Zuordnung speicherbar ist, dadurch gekennzeichnet, daß der Fernsehempfänger (1) den von dem Fernbediengeber (3) empfangenen, einer Funktion zugeordneten ersten Code (C1) an das peripher angeschlossene Gerät (2) zur Steuerung dieser Funktion weitergibt, wobei ein Übersetzer (8) vorgesehen ist, der den von dem Fernbediengeber (3) empfangenen ersten Code (C1) in den zum peripheren Gerät weiterzugebenden zweiten Code (C2) umsetzt.

2. Fernsehempfänger nach Anspruch 1, **dadurch gekennzeichnet**, daß ein dem peripheren Gerät (2) zugeordneter, den zweiten Code (C2) sendender Fernbediengeber (4) über eine drahtlose Strecke so an den Fernsehempfänger (1) ankoppelbar ist, daß die den einzelnen Funktionen zugeordneten zweiten Codes (C2) nacheinander im Sinne eines Lernvorganges in den Speicher (M) eingebbar sind.

3. Fernsehempfänger nach Anspruch 1, **dadurch gekennzeichnet**, daß jeweils die dem Code (C2) zugeordnete Funktion auf dem Bildschirm (6) in Form von Schriftzeichen dargestellt wird.

4. Fernsehempfänger nach Anspruch 1, **dadurch gekennzeichnet**, daß auf dem Bildschirm (6) an den Benutzer Hinweise gegeben werden, mit dem dem peripheren Gerät (2) zugeordneten Fernbediengeber (4) die den einzelnen Funktionen zugeordneten zweiten Codes (C2) nacheinander an den Fernsehempfänger (1) zu senden.

## Claims

1. Television receiver (1) which is remotely controllable by a remote controller (3) which transmits a first code (C1), and a device (2) being peripherally connectable to the television receiver (1), which is remotely controllable by means of a second code (C2) which differs from the first code (C1), and in the television receiver (1) a memory (M) for the first code (C1) and the second code (C2) is provided, and a relationship between the codes (C1, C2) is storable, characterised in that the television receiver (1) transmits the first code (C1) which is assigned to a function and is received from the remote controller (3) to the peripherally connected device (2) for controlling this function, wherein a translator (8) is provided, which converts the first code (C1) received from the remote controller (3) into the second code (C2) which is to be passed on to the peripheral device.

2. Television receiver according to claim 1, characterised in that a remote controller (4) assigned to the peripheral device (2) and which transmits the second code (C2) can be coupled to the television receiver (1) via a wireless path so that the second codes (C2) assigned to the individual functions can be input in succession in the sense of a learning process into the memory (M).

3. Television receiver according to claim 1, characterised in that each function assigned to the code (C2) is shown on the screen (6) in the form of characters.

4. Television receiver according to claim 1, characterised in that instructions are given to the user on the screen (6) for sending, to the television receiver (1) in succession, with the remote controller (4) assigned to the peripheral device (2), the second codes (C2) assigned to the individual functions.

## Revendications

1. Récepteur de télévision (1) qui peut être télécommandé au moyen d'un émetteur de télécommande (3) qui émet un premier code (C1), un appareil (2) pouvant être raccordé en périphérie au récepteur de télévision (1), appareil qui peut être télécommandé au moyen d'un second code (C2) qui diffère du premier code (C1), et une mémoire (M) pour le premier code (C1) et le second code (C2) étant prévue dans le récepteur de télévision (1), une correspondance entre les codes (C1, C2) pouvant être mise en mémoire, **caractérisé en ce** que le récepteur de télévision (1) transmet le premier code (C1) reçu par l'émetteur de télécommande (3), affecté à une fonction, à l'appareil (2) raccordé en périphérie pour commander cette fonction, un traducteur (8) étant prévu pour transformer le premier code (C1) reçu par l'émetteur de télécommande (3) en second code (C2) devant être transmis à l'appareil périphérique.

2. Récepteur de télévision selon la revendication 1, **caractérisé en ce** qu'un émetteur de télécommande (4) affecté à l'appareil périphérique (2) qui émet le second code (C2) peut être coupé par une ligne sans fil au récepteur de télévision (1) de telle manière que les seconds codes (C2), affectés aux différentes fonctions, peuvent être entrés les uns après les autres dans la mémoire (M) pour un processus d'apprentissage.

3. Récepteur de télévision selon la revendication 1, **caractérisé en ce** que la fonction respectivement affectée au code (C2) est représentée sur l'écran (6) sous forme de caractères.

4. Récepteur de télévision selon la revendication 1, **caractérisé en ce** que des indications sont données sur l'écran (6) à l'utilisateur de transmettre au récepteur de télévision (1) avec l'émetteur de télécommande (4) affecté à l'appareil périphérique (2) les seconds codes (C2) affectés aux différentes fonctions les uns après les autres.
